# EUROPEAN PATENT APPLICATION

(11) **EP 3 859 054 A1**
(43) Date of publication of application: **04.08.2021**
(21) Application number: 19812894.4
(22) Date of filing: 23.10.2019
(51) Int. Cl.: C25D 5/02, C25D 5/12, C23C 18/16

(54) **PLATING METHOD AND PLATING BODY**

(30) Priority: 24.10.2018 KR 20180127443
(71) Applicant: DAE SAN ELECTRONICS CO., LTD., Gyeonggi-do 18284 (KR)
(72) Inventor: CHEONG, Do Young, Pyeongtaek-si Gyeonggi-do 17734 (KR); CHOI, Jin Wook, Hwaseong-si Gyeonggi-do 18439 (KR); OH, June Seok, Hwaseong-si Gyeonggi-do 18392 (KR); KIM, Ri A, Suwon-si Gyeonggi-do 16605 (KR); KIM, Do Yeon, Namyangju-si Gyeonggi-do 12157 (KR); YON, Hae Sun, Suwon-si Gyeonggi-do 16295 (KR)
(74) Representative: Vossius & Partner Patentanwälte Rechtsanwälte mbB
(86) International application number: PCT/KR2019/013939
(87) International publication number: WO 2020/085780

(57) **Abstract**

Provided is a plating method including performing a first masking that masks a first region and a second region among the first region including only a first metal and the second region including only a second metal in a clad metal having the first metal and the second metal cladded, and a third region including a contact part between the first metal and the second metal, precipitating the clad metal in a first plating solution, performing a second masking that removes the processed masking in one of the first region and the second region, precipitating at least the region where the second masking has been performed in a second plating solution, and precipitating the region where the second masking has been performed and the third region in a third plating solution.

## Description

### [Technical Field]

The present disclosure relates to a plating method and a plated metal.

### [Background Art]

In general, a plating work is performed by precipitating in a plating solution in order to plate a clad metal and since the clad metal is formed by cladding between the heterogeneous metals in many cases, there is a case where the plating should be performed by using solutions different from each other according to the characteristics of each metal. However, in the process of precipitating one metal of the heterogeneous metals in the plating solution, portions of the other metals are precipitated and impurities are introduced into the plating solution, thereby reducing the usage available time and the number of precipitable times of the plating solution, such that various means are used to prevent them. There is a method for preventing exposure from the plating solution through the masking except for the metal to be plated as one means, and since this is a case where the plating solution is introduced into the masking according to the degree of completion of the masking, other methods have been required.

### [Related Art Document]

### [Patent Document]

[Patent Document 1] Korean Patent Laid-Open Publication No. 2006-0013271 (February 09, 2006)

### [Disclosure]

### [Technical Problem]

An object of an embodiment of the present disclosure is to provide a plating method for preventing the contamination of the plating solution caused by the generation of impurities in a zincating process in response to the plating solution during the plating of a clad metal.

Another object of an embodiment of the present disclosure is to provide a plating method for preventing the plating stain and the adhesion failure from occurring by the solution being introduced into the masking tape during the plating of the clad metal.

Still another object of an embodiment of the present disclosure is to provide a plated metal manufactured by preventing the contamination of the plating solution caused by the generation of impurities in the zincating process in response to the plating solution during the plating of the clad metal.

Yet another object of an embodiment of the present disclosure is to provide a plated metal manufactured by preventing the plating stain and the adhesion failure from occurring by the solution being introduced into the masking tape during the plating of the clad metal.

### [Technical Solution]

Provided is a plating method including performing a first masking that masks a first region and a second region among the first region including only a first metal and the second region including only a second metal in a clad metal having the first metal and the second metal cladded, and a third region including a contact part between the first metal and the second metal, precipitating the clad metal in a first plating solution, performing a second masking that removes the processed masking in one of the first region and the second region, precipitating at least the region where the second masking has been performed in a second plating solution, and precipitating the region where the second masking has been performed and the third region in a third plating solution.

Further, the first metal and the second metal may be heterogeneous metals, and each metal may contain copper or aluminum.

Further, the third region may be nickel-plated by the first plating solution.

Further, one or more of the second plating solution and the third plating solution may be a mixed plating solution of nickel and tin.

Further, the third region of the clad metal may be 2mm to 3mm in width.

Provided is a plated metal including a first metal, a second metal, and a clad part that is a region cladded between the first metal and the second metal, and having a first plating layer formed on the surface thereof, and the first metal or the second metal may have a second plating layer formed in a region including the surface thereof, and have a third plating layer formed in a region including at least a portion of the surface of the second plating layer.

Further, the first metal and the second metal may be heterogeneous metals, and each metal may contain copper or aluminum.

Further, the first plating layer may contain nickel.

Further, one or more of the second plating layer and the third plating layer may contain nickel and tin.

Further, the clad part may be 2mm to 3mm in width.

### [Advantageous Effects]

An embodiment of the present disclosure may provide a plating method for preventing the contamination of the plating solution caused by the generation of impurities in a zincating process in response to the plating solution during the plating of a clad metal.

An embodiment of the present disclosure may provide a plating method for preventing the plating stain and the adhesion failure from occurring by the solution being introduced into the masking tape during the plating of the clad metal.

An embodiment of the present disclosure may provide a plated metal manufactured by preventing the contamination of the plating solution caused by the generation of impurities in the zincating process in response to the plating solution during the plating of the clad metal.

An embodiment of the present disclosure may provide a plated metal manufactured by preventing the plating stain and the adhesion failure from occurring by the solution being introduced into the masking tape during the plating of the clad metal.

### [Description of Drawings]

FIG. 1 is a flowchart illustrating the sequence of a plating method according to an embodiment of the present disclosure.
FIG. 2 is a diagram illustrating a state where a first metal and a second metal are matched with each other according to an embodiment of the present disclosure.
FIG. 3 is a diagram illustrating a plated metal formed with a first plating layer according to an embodiment of the present disclosure.
FIGS. 4A, 4B, and 4C are diagrams illustrating a plated metal formed with a second plating layer according to an embodiment of the present disclosure.
FIGS. 5A, 5B, and 5C are diagrams illustrating a plated metal formed with a third plating layer according to an embodiment of the present disclosure.

### [Best Mode]

Hereinafter, specific embodiments of the present disclosure will be described with reference to the drawings. However, this is only an example and the present disclosure is not limited thereto.

In describing the present disclosure, when it is determined that the detailed description of the known technology related to the present disclosure may unnecessarily obscure the subject matter of the present disclosure, the detailed description thereof will be omitted. Further, terms to be described below are terms defined in consideration of functions in the present disclosure, which may vary according to the intention or custom of a user or an operator. Therefore, its definition should be made based on the contents throughout the specification.

The technical spirit of the present disclosure is determined by the claims, and the following embodiments are merely a means for efficiently explaining the technical spirit of the present disclosure to those skilled in the art to which the present disclosure pertains.

Hereinafter, in order to explain the plating method and the plated metal of the present disclosure, the section on the plated metal has been arbitrarily classified into several regions. For example, a section including only a first metal 100 has been classified as a first region (T1), a section including only the second metal 200 has been classified as a second region (T2), and a portion including a partial section where the first metal 100 and the second metal 200 have been continuous, that is, a clad part 300 has been classified as a third region (T3).

Further, masking the first region (T1) and the second region (T2) of the masking required in the plating process is referred to as a first masking (M1), and peeling and exposing one of the processed masking in the first region (T1) and the second region (T2) worked during the first masking (M1) is referred to as a second masking (M2).

Further, the plating solution used for plating preferentially in the order of attempting the plating through the plating solution is referred to as a first plating solution, and sequentially referred to as a second plating solution (P2) and a third plating solution (P3) used for the plating.

Further, the plating layer formed by plating through the plating solution is also referred to as a first plating layer (F1), a second plating layer (F2), and a third plating layer (F3) from the plating layer formed preferentially from the surface of a clad metal 10. That is, the plating layer formed by the first plating solution may be referred to as the first plating layer, the plating layer formed by the second plating solution may be referred to as the second plating layer, and the plating layer formed by the third plating solution may be referred to as the third plating layer.

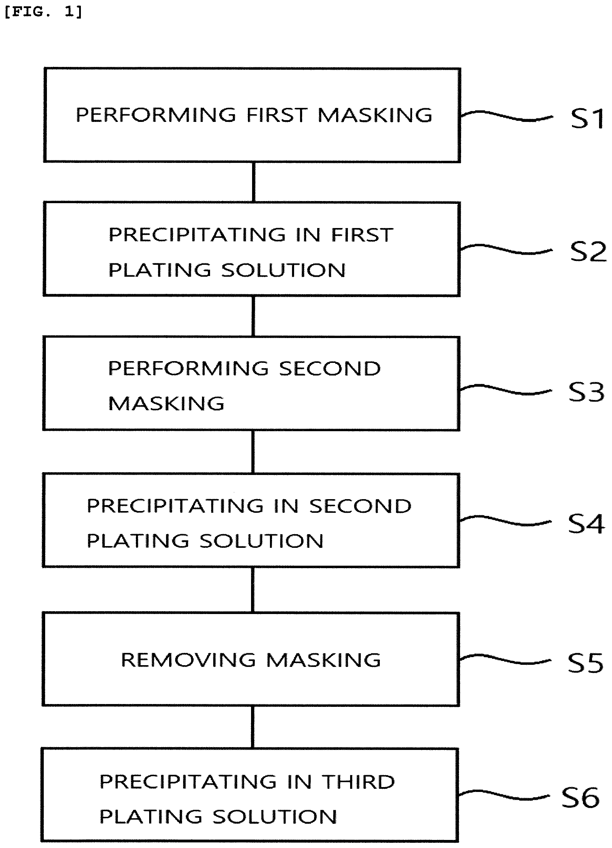

FIG. 1 is a flowchart illustrating the sequence of the plating method according to an embodiment of the present disclosure.

Referring to FIG. 1, the plating method may be performed by repeating the masking and the precipitation. Specifically, the plating method may include performing the first masking (operation S1), precipitating in a first plating solution (operation S2), performing the second masking (operation S3), precipitating in a second plating solution (operation S4), removing the masking (operation S5), and precipitating in a third plating solution (operation S6).

Specifically, the performing the first masking (operation S1) may mask the first region (T1) including only the first metal 100 and the second region (T2) including only the second metal 200. That is, it may become a state where the first region (T1) and the second region (T2) are not exposed to the plating solution, and only the third region (T3) is exposed to the plating solution when being precipitated in the plating solution. That is, the plating may be processed by being precipitated in the plating solution in a state where the third region (T3) has been exposed.

Meanwhile, the first metal and the second metal may be heterogeneous metals different from each other. For example, copper may be the first metal 100 and aluminum may be the second metal 200. Here, the boundary of the exposed surfaces of the first metal 100 and the second metal 200 may be uneven. Due to this uneven boundary, when the heterogeneous metal is precipitated in the plating solution, it is difficult to precipitate so that only the first metal or the second metal is precipitated. Due to the uneven boundary, the metal part of the unintentional side may be precipitated in the plating solution, and the plating solution may become cloudy or the components constituting the plating solution may be diluted by a chemical reaction or the like. Therefore, the life of the plating solution may be lowered.

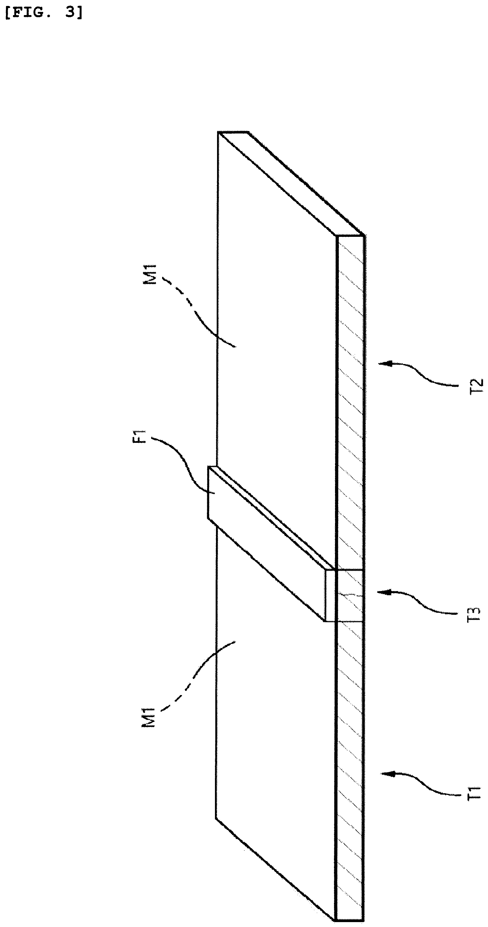

In order to avoid this point, the clad part (300 in FIG. 3) including the boundary between the two metals 100, 200 may be primarily plated and one or more of the first region (T1) and the second region (T2) may be optionally plated later. In an embodiment of the plating method according to the present disclosure, the precipitating in the first plating solution (operation S2) may be performed after the performing the first masking (operation S1) for the primary plating. Therefore, the performing the first masking (operation S1) may be an operation of masking the first region (T1) and the second region (T2).

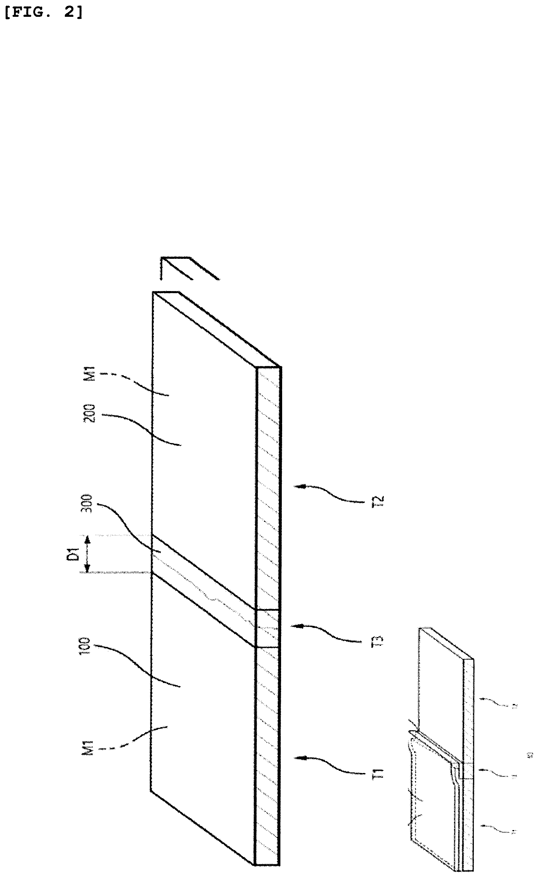

If the precipitating in the first plating solution (operation S2) has been completed, the performing the second masking (operation S3) may be performed. The performing the second masking (operation S3) means to create a masking state for plating the region including at least one of the first metal 100 and the second metal 200. Therefore, a process of removing the masking of one or more regions of the first region (T1) and the second region (T2) masking-processed in the performing the first masking (operation S1). That is, it is possible to perform the performing the second masking (operation S3) so that one or more of the first region (T1) and the second region (T2) may be exposed to the plating solution. In an embodiment of the present disclosure, the performing the second masking (operation S3) may be made only for the first region (T1) from FIG. 2, thereby plating the portion including the first region (T1). Specifically, it may be exposed so that at least a portion of the first region (T1) may be plated or at least portions of the first region (T1) and the third region (T3) may be plated.

After the performing the second masking (operation S3) has been completed, the precipitating in the second plating solution (operation S4) that precipitates the second plating layer in the second plating solution. The plated metal precipitated in the second plating solution may have at least a portion of the first region (T1) or at least portions of the first region (T1) and the third region (T3).

After the precipitating in the second plating solution (operation S4) has been performed, the removing the masking may be performed. Since the performing the second masking (operation S3) has removed the processed masking in the first region (T1), which is one region of the first region (T1) and the second region (T2) so that the plating may be processed for the first region (T1), the processed masking may remain in the second region (T2). The plating process may be completed by performing the removing the masking (operation S5) that removes the masking remaining in the second region (T2), and performing the precipitating in the third plating solution (operation S6). Here, according to an embodiment of the present disclosure, the removing the masking (operation S5) means to remove all the processed masking in the plated metal.

Hereinafter, a process of performing the plating will be described with reference to FIGS. 2 to 5, which are diagrams illustrating the heterogeneous metal to be plated after FIG. 1 that is a flowchart.

FIG. 2 is a diagram illustrating a state where the first metal 100 and the second metal 200 are matched with each other according to an embodiment of the present disclosure.

Referring to FIG. 2, the heterogeneous metals may be in the form of the clad metal cladded to each other, respectively. The clad metal may be classified into the first region (T1) including only the first metal 100, the second region (T2) including only the second metal 200, and the third region (T3) including portions of the first metal 100 and the second metal 200. The third region (T3) includes the boundary formed by two surfaces cladded between the metals. Since the boundary is uneven, there occurs a case where the first metal 100 and the second metal 200 are precipitated together if they are precipitated in the plating solution during the plating, such that the plating layer may be formed only in the third region (T3). The plating layer may be formed by performing the first masking (M1) for the first region (T1) and the second region (T2) to expose the third region (T3) to the plating solution.

FIG. 3 is a diagram illustrating a plated metal formed with the first plating layer (F1) according to an embodiment of the present disclosure.

Referring to FIG. 3, the first plating layer (F1) may be formed on the third region (T3) exposed by the first region (T1) and the second region (T2) subjected to the first masking (M1). Here, the width (D1) of the third region (T3) may vary according to the shape of the boundary, but the first plating layer (F1) may be 2mm to 3mm. That is, the first plating layer (F1) may be formed in the width of 2mm to 3mm on the third region (T3), and the thickness thereof may be several micrometers to several tens of micrometers. Preferably, it may be 5 micrometers, and the increase in the plating adhesion is included in a factor that performs the nickel plating primarily. Here, the plating adhesion may be performance for minimizing or preventing peeling phenomenon. In the present disclosure, this means the performance for preventing or minimizing the peeling of the second plating layer (F2) and the third plating layer (F3).

Further, the first plating layer (F1) may be formed by being precipitated in the plating solution containing nickel. That is, the first plating layer (F1) may contain nickel.

When the plating is performed by the second plating solution and the third plating solution, the first plating layer (F1) may serve as a safety line so that only one of the first metal 100 and the second metal 200 may be exposed to the plating solution. The safety line may be positioned to maintain the life of the plating solution because the plating solution may become cloudy by a chemical reaction or the like if the plating solution is precipitated on all the heterogeneous metals.

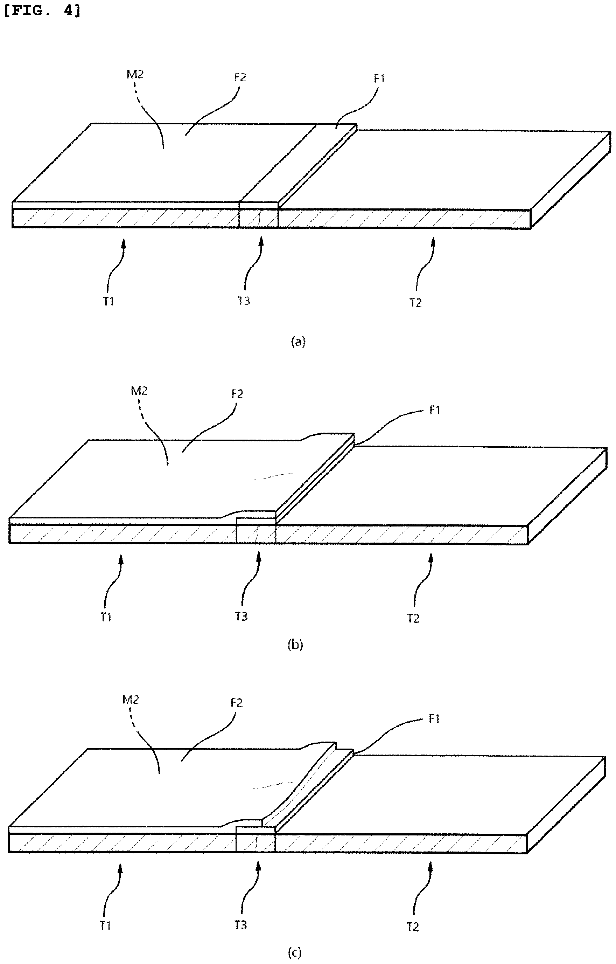

FIG. 4 is a diagram for explaining a second plating layer of the present disclosure, and FIGS. 4A, 4B, and 4C are diagrams illustrating the plated metal formed with the second plating layer (F2) according to an embodiment of the present disclosure, respectively.

FIG. 4 illustrates examples in which the second plating layer (F2) is formed in a state where the first plating layer (F1) has been formed in the first region (T1) described with reference to FIG. 3. Referring to FIG. 4A, the second plating layer (F2) may be positioned on the first region (T1). That is, the second plating layer (F2) may be positioned on the first region (T1), and the first plating layer (F1) may be positioned on the third region (T3), respectively. This case is to allow only the first region (T1) to be precipitated in the second plating solution during the precipitation, and to allow the second plating layer (F2) to be formed on at least the entire surface of the first region (T1).

Meanwhile, as in FIG. 4B, the second plating layer (F2) may be prepared to be laminated with the first plating layer (F1). Since this is after having performed the second masking (M2), the second region (T2) may be a state where the masking has been performed. Therefore, since the plating solution and the second region (T2) do not directly contact, the second region (T2) may not be plating-processed. Therefore, the second plating layer (F2) may be formed on the first region (T1) and the third region (T3). However, the third region (T3) may be formed by being laminated on the first plating layer (F1) because it is after the first plating layer (F1) has been formed on the surface. That is, the first plating layer (F1) and the second plating layer (F2) may be positioned on the third region (T3).

However, as in FIG. 4C, the layers may be laminated, and only a portion thereof may also be laminated. This case may be laminated on the exposed first plating layer (F1) and second plating layer (F2) in the process of plating the third plating layer (F3). In the case of the present example, even when the second plating layer (F2) is formed unevenly based on the width of the first plating layer (F1), the third plating layer (F3) serves as a safety line so that the second plating solution does not contact the second region (T2). Here, the second plating layer (F2) may be preferably formed in the thickness of 12 micrometers. If it is less than 10 micrometers, corrosiveness may become weak, and if it is more than 14 micrometers, the possibility that the peeling will occur increases.

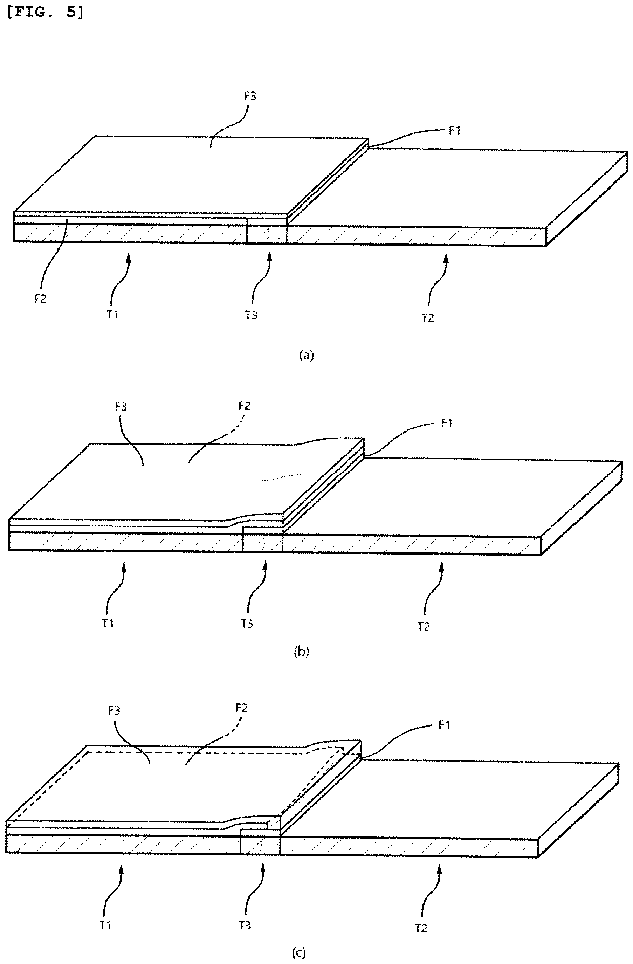

FIG. 5 is a diagram for explaining a third plating layer of the present disclosure, and FIGS. 5A, 5B, and 5C are diagrams illustrating a plated metal formed with a third plating layer according to an embodiment of the present disclosure.

FIG. 5 illustrates examples in which the third plating layer (F3) is formed by being laminated in a state where the second plating layer (F2) has been formed on one or more of the first region (T1) and the third region (T3) described with reference to FIG. 4. Referring to FIG. 5A, the third plating layer (F3) may be positioned on the first region (T1) and the third region (T3). That is, the second plating layer (F2) and the third plating layer (F3) may be positioned on the first region (T1), and the first plating layer (F1) and the third plating layer (F3) may be positioned on the third region (T3), respectively. This case is to allow the first region (T1) and the third region (T3) to be precipitated in the second plating solution during the precipitation, and to allow the third plating layer (F3) to be formed on at least the entire surfaces of the first region (T1) and the third region (T3).

Here, the third plating layer (F3) may be preferably formed in the thickness of 12 micrometers. If it is less than 10 micrometers, corrosiveness may become weak, and if it is more than 14 micrometers, the possibility that the peeling will occur increases.

Meanwhile, as in FIG. 5B, the fifth plating layer F5 may be prepared by being laminated with the first plating layer (F1) and the second plating layer (F2). Since the third plating solution and the second region (T2) do not directly contact, the second region (T2) may not be plating-processed. Therefore, the third plating layer (F3) may be formed of three plating layers (F1, F2, F3) on the first region (T1) and the third region (T3).

However, as in FIG. 5C, the plating layers may be laminated on each other, and may also be laminated with each of the first plating layer (F1) and the second plating layer (F2). This case may be a case where since the second plating layer (F2) is not plated on the entire exposed area of the first plating layer (F1) in the plating process, it is positioned to be laminated with the second plating layer (F2) at least even when both the first plating layer (F1) and the second plating layer (F2) have been exposed. Even in this case, the contact between the second metal 200 and the third plating solution may not occur.

In the above description for explaining the present disclosure, when the clad metal 10 between copper and aluminum is taken as an example, the first plating solution may be a plating solution containing nickel. Of course, the type of the first plating solution may also be changed according to the type of the clad metal 10.

Further, the primarily plating the third region (T3) is intended to serve as the safety line described above, and specifically, if the depth precipitated in the plating solution is controlled, it may be a range capable of accommodating an error range of the precipitated depth. Therefore, the width of the third region (T3) is preferably 2.5mm, but the range of the width may be determined to be 2mm to 3mm considering the error range. Here, since 2.5mm is the width required in the masking process, there is the possibility to be changed according to the plating condition.

For example, if the clad metal is precipitated in the plating solution through mechanical driving, the width of the third region (T3) may be determined to be greater than an error generated in the mechanical control. Furthermore, the error may also be determined considering the viscosity of the plating solution.

As described above, although the representative embodiments of the present disclosure have been described in detail, it will be understood by those skilled in the art to which the present disclosure pertains that various modifications of the above-described embodiment may be made without departing from the scope of the present disclosure. Therefore, the scope of the present disclosure should not be limited to the described embodiments, and should be defined by the claims and equivalents thereof.

## Claims

1. A plating method, comprising:
performing a first masking that masks a first region and a second region among the first region comprising only a first metal and the second region comprising only a second metal in a clad metal having the first metal and the second metal cladded, and a third region comprising a contact part between the first metal and the second metal;
precipitating the clad metal in a first plating solution;
performing a second masking that removes the processed masking in one of the first region and the second region;
precipitating at least the region where the second masking has been performed in a second plating solution; and
precipitating the region where the second masking has been performed and the third region in a third plating solution.

2. The plating method of claim 1,
wherein the first metal and the second metal are heterogeneous metals, and each metal comprises copper or aluminum.

3. The plating method of claim 1,
wherein the third region is nickel-plated by the first plating solution.

4. The plating method of claim 1,
wherein one or more of the second plating solution and the third plating solution are a mixed plating solution of nickel and tin.

5. The plating method of claim 1,
wherein the third region of the clad metal is 2mm to 3mm in width.

6. A plated metal, comprising:
a first metal;
a second metal; and
a clad part that is a region cladded between the first metal and the second metal, and having a first plating layer formed on the surface thereof,
wherein the first metal or the second metal has a second plating layer formed in a region comprising the surface thereof, and has a third plating layer formed in a region comprising at least a portion of the surface of the second plating layer.

7. The plated metal of claim 6,
wherein the first metal and the second metal are heterogeneous metals, and each metal comprises copper or aluminum.

8. The plated metal of claim 6,
wherein the first plating layer comprises nickel.

9. The plated metal of claim 6,
wherein one or more of the second plating layer and the third plating layer comprise nickel and tin.

10. The plated metal of claim 6,
wherein the clad part is 2mm to 3mm in width.
